(19) Europäisches Patentamt
European Patent Office
Office européen des brevets

(11) **EP 1 714 511 B1**

(12) **FASCICULE DE BREVET EUROPEEN**

(45) Date de publication et mention
de la délivrance du brevet:
**12.08.2009  Bulletin 2009/33**

(21) Numéro de dépôt: **05701497.9**

(22) Date de dépôt: **12.01.2005**

(51) Int Cl.:
**H04W 24/02** *(2009.01)*

(86) Numéro de dépôt international:
**PCT/EP2005/050109**

(87) Numéro de publication internationale:
**WO 2005/088999 (22.09.2005 Gazette 2005/38)**

(54) **PROCEDE D'OPTIMISATION DE LA PLANIFICATION DANS UN SYSTEME DE COMMUNICATION CDMA**

VERFAHREN ZUR OPTIMIERUNG DER PLANUNG IN EINEM CDMA-KOMMUNIKATIONSSYSTEM

METHOD OF OPTIMISING PLANNING IN A CDMA COMMUNICATION SYSTEM

(84) Etats contractants désignés:
**AT BE BG CH CY CZ DE DK EE ES FI FR GB GR HU IE IS IT LI LT LU MC NL PL PT RO SE SI SK TR**

(30) Priorité: **13.02.2004  FR 0401475**

(43) Date de publication de la demande:
**25.10.2006  Bulletin 2006/43**

(73) Titulaire: **THALES**
**92200 Neuilly sur Seine (FR)**

(72) Inventeurs:
• **PIPON, François,**
**Thales Intellectual Property**
**F-94117 Arcueil Cedex (FR)**
• **DEPIERRE, David,**
**Thales Intellectual Property**
**F-94117 Arcueil Cedex (FR)**

(74) Mandataire: **Dudouit, Isabelle**
**Marks & Clerk France**
**Conseils en Propriété Industrielle**
**Immeuble " Visium "**
**22, avenue Aristide Briand**
**94117 Arcueil Cedex (FR)**

(56) Documents cités:
**EP-A- 1 098 545          FR-A- 2 715 488**
**FR-A- 2 820 933          US-A1- 2003 100 299**

• **KI-HONG KIM ET AL: "Development of the CDMA system performance analysis tool (CDAT)" VEHICULAR TECHNOLOGY CONFERENCE, 1996. MOBILE TECHNOLOGY FOR THE HUMAN RACE., IEEE 46TH ATLANTA, GA, USA 28 APRIL- 1 MAY 1996, NEW YORK, NY, USA,IEEE, US, 28 avril 1996 (1996-04-28), pages 1400-1403, XP010162621 ISBN: 0-7803-3157-5**

EP 1 714 511 B1

# EP 1 714 511 B1

## Description

L'invention concerne un procédé permettant, par exemple à un opérateur, d'optimiser la planification dans un réseau de communications cellulaires de type CDMA (méthode d'accès à répartition par les codes ou en abréviation anglo-saxonne de Code Division Multiple Access).

Elle permet d'estimer les performances d'un réseau et d'optimiser la planification de réseaux déjà déployés à partir de mesures réalisées sur le terrain, notamment en tenant compte de l'effet du canal de propagation, des interférences intracellulaires et extracellulaires.

Elle s'applique, par exemple, pour la planification de réseaux UMTS (Universal Mobile Telecommunications System), IS95, CDMA2000, etc. Elle trouve son application dans l'analyse de la qualité de service des réseaux de téléphonie mobile de troisième génération.

Elle peut aussi s'appliquer pour des fonctions de métrologie, d'aide à la planification cellulaire, de dimensionnement des réseaux.

Un réseau de téléphonie /télécommunication mobile est constitué de cellules couvrant la zone géographique dans laquelle l'opérateur souhaite être présent. Chaque cellule est associée à une station de base avec laquelle les récepteurs mobiles situés dans la cellule sont en contact.

La qualité de service d'un réseau de téléphonie mobile dépend de nombreux paramètres, dont notamment les suivants : la position des stations de base, leur puissance, le nombre d'utilisateurs par cellule, les obstacles entre le récepteur mobile et la station de base.

A l'heure actuelle, différents outils de planification sont proposés aux opérateurs afin de prédire la qualité de service obtenue sur le réseau en fonction de différents paramètres, tels que le nombre d'utilisateurs, la position et le service associés à chaque utilisateur, etc. Ces outils intègrent des modèles de propagation permettant de prédire le niveau de chaque station de base reçu en tout point du réseau. Il est aussi intéressant d'intégrer dans ces outils de planification, une modélisation du facteur de perte d'orthogonalité défini par la suite, qu'il est important de bien estimer car il permet de déterminer le niveau d'interférence intracellulaire due à la propagation par multi-trajets. L'interférence intra-cellulaire correspond à l'interférence générée par tous les utilisateurs de la cellule avec laquelle le mobile est en liaison. Les modèles de propagation introduits dans les outils de planification ont une précision donnée et sont utiles pour le dimensionnement du réseau. Ils sont toutefois insuffisants pour estimer de manière précise les performances réelles d'un réseau déployé. Dans ces conditions, les opérateurs ont besoin de mesures effectuées sur le terrain pour estimer les performances de leurs réseaux et optimiser la planification cellulaire.

Afin d'évaluer la qualité de planification de leur réseau, les opérateurs déterminent les zones où chaque service (voix, 64 kps, 144 kps, etc.) est assuré. Ces zones dépendant de la charge de trafic globale du réseau. Elles sont définies en général pour un cas défavorable avec un réseau fortement chargé de manière uniforme, par exemple 50%. Actuellement, les opérateurs utilisent communément les mesures terrain du $E_c/I_0$ du canal pilote comme critère de planification d'un réseau, où $E_c$ correspond à l'énergie chip du canal pilote et $I_0$ à la puissance totale du signal reçu. A chaque service proposé par l'opérateur des seuils sont associés, permettant ainsi de déterminer si le service peut être ou non assuré au point de mesure. Ce critère présente néanmoins certains inconvénients, par exemple :

○ il est en pratique inutilisable lorsque la mesure est faite sur un réseau avec charge de trafic. En effet, l'opérateur ne connaît pas la charge du réseau au moment de la mesure. Si le réseau est non chargé, l'opérateur peut déduire du rapport $E_c/I_0$ obtenu au moment de la mesure le rapport $E_c/I_0$ qui serait obtenu lorsque le réseau est chargé avec une charge uniforme, il est dégradé de l'augmentation de puissance uniforme causée par la charge de trafic. Par contre, si le réseau est chargé, il est impossible pour l'opérateur de déduire du rapport $E_c/I_0$ obtenu au moment de la mesure, le rapport $E_c/I_0$ qui serait obtenu lorsque le réseau est chargé avec une charge uniforme.

○ C'est un critère relativement sommaire qui ne prend pas en compte le traitement du récepteur RAKE, défini par la suite, mis en oeuvre par le mobile et donc qui rend imparfaitement compte de la qualité de réception par un mobile au point de mesure.

Le brevet européen EP-A-1 098 545 divulgue un procédé pour caractériser la performance d'un réseau sans fil.

L'invention repose notamment sur la prise en compte de manière précise des conditions locales réelles dans le critère appelé facteur d'interférences, notamment : l'effet du canal de propagation, les interférences intracellulaires et extracellulaires.

On désigne dans la présente description sous l'expression « point de mesure » un point du réseau où est disposé le dispositif d'analyse selon l'invention, endroit géographique d'un réseau où pourrait se trouver un mobile.

L'invention concerne un procédé d'optimisation de la planification dans un réseau de communications de type CDMA comportant une ou plusieurs stations de base et un ou plusieurs utilisateurs mobiles, les signaux échangés étant composés d'une ou de plusieurs trames constituées de slots s. Il est **caractérisé en ce qu**'il comporte au moins les étapes suivantes :

a) positionner un dispositif d'analyse comportant une ou plusieurs voies de réception adapté à détecter les stations de base reçues en un point de mesure au moyen d'une synchronisation multicapteurs,

b) pour chaque station de base détectée, estimer le canal de propagation, $h$(0, s), ..., $h$($L$-1, s), entre le point de mesure et le dispositif, avec L la longueur du canal de propagation,

c) à partir de la puissance des trajets retournés par l'estimation de canal, estimer les puissances reçues Pi pour toutes les stations de base détectées, s étant l'indice d'un slot,

d) déterminer le ou les stations de base de plus fort niveaux qui définissent un groupe de stations actives {Gsa},

e) à partir des résultats obtenus aux étapes a) à d), estimer pour chaque station de base du groupe des stations actives, le filtre de réception $g$ (0, s, a) mis en oeuvre par un mobile situé au point de mesure pour la réception de la station considérée, avec a l'indice de la configuration d'antenne,

f) estimer, pour chaque slot s et chaque configuration d'antenne a du mobile, le rapport $E_s/I_0$ signal/ (bruit + interférence), à partir des estimées du canal de propagation, et en déduire le facteur d'interférence $IF$ associé au mobile placé au point de mesure,

g) déterminer les services pouvant être assurés au point de mesure et comparer la valeur du facteur d'interférence $IF$ obtenue à l'étape f) aux valeurs seuils dépendant de chaque type de service.

Le réseau est par exemple un réseau UMTS ou IS95 ou CDMA2000.

L'invention permet notamment de fournir un nouveau critère de planification adapté aux réseaux de type CDMA, critère basé sur des mesures terrain, et présente les avantages suivants :

○ Elle peut être utilisée sur un réseau chargé ou non,
○ Elle permet d'estimer la qualité de service d'une liaison CDMA, à partir de mesures réalisées sur le terrain,
○ Elle permet d'estimer l'influence de chacune des stations interférentes, et donc de déterminer les stations de base responsables de la pollution du canal pilote en chaque point de mesure,
○ Elle prend en compte les caractéristiques du récepteur implanté sur le mobile (par exemple le nombre de doigts d'un récepteur Rake) et les caractéristiques de propagation pour estimer précisément les niveaux de l'interférence intracellulaire et de l'interférence extracellulaire,
○ Elle permet d'estimer les performances obtenues dans le cas où le mobile est en liaison avec plusieurs stations de base, cas connu sous l'expression « soft Handover ».

D'autres caractéristiques et avantages de la présente invention apparaîtront mieux à la lecture de la description qui suit d'un exemple de réalisation donné à titre illustratif et nullement limitatif annexé des figures qui représentent :

• La figure 1 la composition d'un signal UMTS,
• La figure 2 un modulateur de liaison descendante,
• La figure 3 un schéma fonctionnel du procédé selon l'invention.

L'idée repose notamment sur la prise en compte des conditions locales réelles, telles que l'effet du canal de propagation, les interférences intracellulaires et extracellulaires, dans le critère désigné « facteur d'interférence ». Ce critère est notamment utilisé pour gérer les ressources du réseau.

En résumé, pour chaque station interférente, même faible, les niveaux et les réponses impulsionnelles du canal de propagation associés sont estimés. A partir de ces estimées, le facteur d'interférence est calculé.

Afin de mieux faire comprendre le procédé selon l'invention, l'exemple donné ci-après concerne une application UMTS FDD (abréviation anglo-saxonne de Universal Mobile Télécommunications System Frequency Division Duplex). Elle s'applique aussi à toute liaison CDMA.

Avant d'exposer les principes de l'invention, quelques rappels sur la forme des signaux et leur modélisation sont donnés.

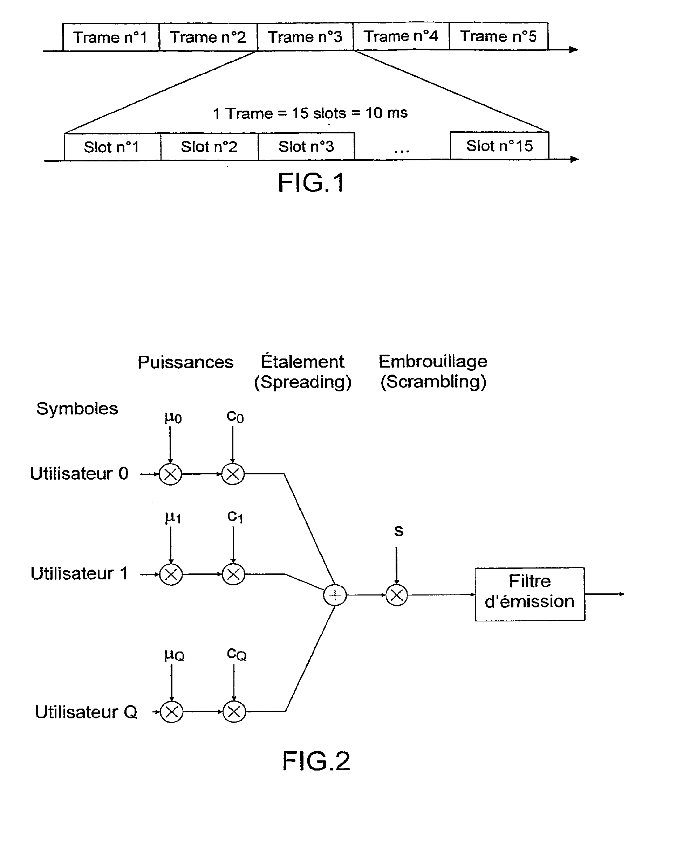

La figure 1 modélise la composition du signal UMTS émis par une station de base vers un ou plusieurs mobiles (liaison descendante). Le signal $d$($t$) est constitué de plusieurs trames, chaque trame comprenant, par exemple, 15 slots de durée fixée.

La figure 2 schématise un exemple de modulateur pour la liaison descendante.

Le signal destiné à un utilisateur donné est constitué, par exemple, d'éléments binaires appelés « bits ». Ces bits sont regroupés deux à deux pour former des symboles « Q-PSK » (abréviation anglo-saxonne de Quadrature Phase Shift Keying).

Les symboles Q-PSK, notés $b_q$(0), ....bq($L$-1) destinés à un utilisateur $q$ sont d'abord multipliés par un facteur de puissance $\mu_q$. Chaque symbole est ensuite module par une séquence, appelée séquence d'étalement (désignée par le terme anglo-saxon spreading sequence) notée $c_q$ de +/-1 et de taille $N_q$, facteur d'étalement. Ainsi, on forme à partir du symbole $b_q(l)$ la suite $\mu_q b_q(l) c_q(0), ..... \mu_q b_q(N_q - 1) c_q(0)$, où $l$ est l'indice de l'échantillon.

Les séquences d'étalement $c_q$ sont orthogonales de sorte que :

$$\sum_{n=0}^{\min(N_q, N_p)} c_q(n)c_p(n) = N_q \quad \text{si } p = q \quad (1)$$
$$= 0 \quad \text{sinon}$$

Les suites ainsi formées sont alors multipliées terme à terme par une suite de symboles, +/-1 +/-i, appelé code d'embrouillage $s$ (ou scrambling code en termes anglo-saxon). Cette suite est périodique, de période trame, et est construite de façon à simuler un signal aléatoire.

Le signal résultant à émettre s'exprime alors par l'expression

$$d(l.N_q + n) = \sum_{q=0}^{Q} \mu_q b_q(l) c_q(n) s(l.N_q + n) \quad (2)$$

Ce signal passe à travers un filtre d'émission et est diffusé par la station de base à l'attention des mobiles.

Modélisation d'un signal reçu par un mobile

Le signal est reçu sur un réseau de capteurs équipant le mobile après avoir traversé le canal radio entre le mobile et la station de base utile. Après échantillonnage selon une méthode connue de l'Homme du métier, il s'exprime, par exemple, au moyen de la relation:

$$x(n) = \sum_{k=0}^{L-1} d(n-k)h(k) + \sum_{i=1}^{N_{Int}} d_i(n-k)h_i(k) + b(n) \quad (3)$$

Les caractères gras-italique désignent des vecteurs (de dimension le nombre de capteurs), l'indice $k$ correspond à l'indice du trajet, $x(n)$ est le vecteur des signaux reçus à l'instant $n$ sur le réseau de capteurs, $h$ est le canal multi-capteurs du signal émis par la station de base utile, $h(k)$ correspond au trajet $k$ du canal de propagation. $L$ est la taille de la réponse impulsionnelle du canal, $N_{Int}$ est le nombre de stations qui interfèrent avec la station de base utile (station détectée comme étant la station de plus fort niveau, avec laquelle le mobile se met en liaison), $d_i(n)$ est le signal émis par la station interférente numéro $i$, $h_i(k)$ est le canal multi-capteurs entre la station interférente d'indice $i$ et le mobile, et $b(n)$ est un bruit additif modélisant le bruit thermique.

Le mobile met généralement en oeuvre un récepteur UMTS linéaire, qui est constitué d'un filtre égaliseur spatio-temporel, d'un désembrouillage (descrambling) et d'un désétalement (ou despreading en terme anglo-saxon). A la sortie de l'égaliseur spatio-temporel, le signal reçu s'écrit par exemple sous la forme :

$$y(n) = \sum_{p=0}^{P-1} g(p)^H x(n+p) \quad (4)$$

où $g(p)$ est la $p^{\text{ème}}$ composante spatiale du filtre égaliseur, l'exposant $'H'$ correspond au transposé-conjugué de $g(p)$, $P$ la longueur de la réponse impulsionnelle du récepteur mis en oeuvre. A la sortie du désembrouilleur, le signal s'écrit :

$$z(n) = s^*(n) y(n) \qquad (5)$$

où $s^*(n)$ est le conjugué du code d'étalement (ou scrambling code en termes anglo-saxon) à l'instant $n$. Enfin, après le desétalement, on obtient :

$$r = \frac{1}{N_p} \sum_{n=0}^{N_p-1} c(n) z(n) \qquad (6)$$

Le récepteur décide en fonction de la valeur de $r$, du symbole qui a été émis. En effet, $r$ est égal au symbole émis plus un bruit dû aux interférences intracellulaire et extra cellulaires, ainsi qu'au bruit thermique. Si ce bruit est trop important, la décision prise par le récepteur peut être erronée. Les bits émis ne sont alors pas correctement démodulés.

La description qui suit concerne une réception linéaire multicapteurs mise en oeuvre par le mobile, ce qui comprend notamment la réception monocapteur classique par un récepteur Rake. Ce dernier est en effet basé sur un filtrage par un filtre linéaire dont les $M$ coefficients correspondent aux $M$ coefficients de plus fortes énergies de la réponse impulsionnelle du canal de propagation. $M$ est habituellement appelé « nombre de doigts » (ou finger en dénomination anglo-saxonne) du récepteur Rake.

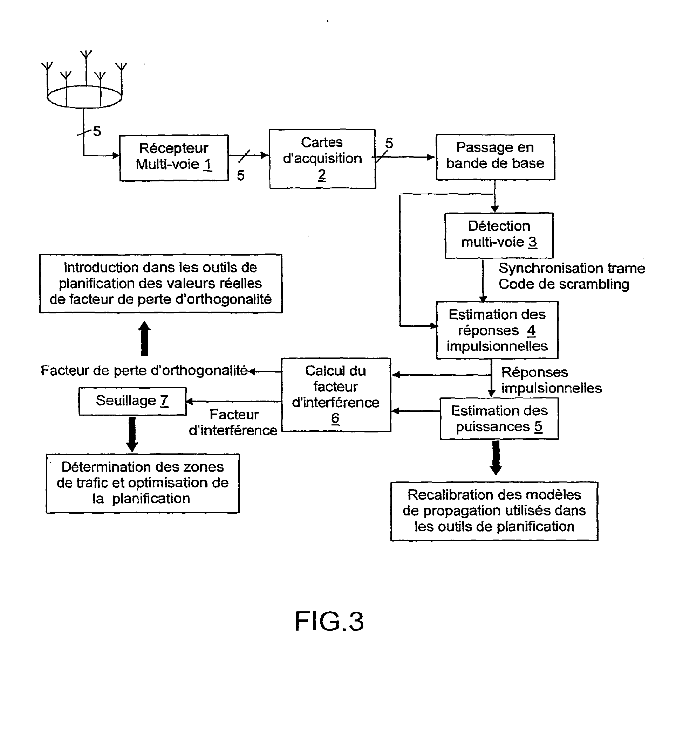

Comme il a été indiqué précédemment, le dispositif d'analyse se positionne en différents points du réseau appelés « point de mesure », qui correspondent à des points où pourrait se trouver un mobile.
Le dispositif d'analyse adapté pour mettre en oeuvre les étapes du procédé selon l'invention, possède par exemple une architecture telle que celle décrite à la figure 3. Les signaux sont reçus sur un récepteur multivoies 1, associé à une ou plusieurs cartes d'acquisition 2 permettant la numérisation du signal. Les signaux numérisés sont ensuite traités par un module de détection multivoie 3, un module 4 d'estimation des réponses impulsionnelles, un module 5 d'estimation des puissances et un module 6 permettant le calcul du facteur d'interférences suivi d'un module 7 de décision ou de seuillage. Ces différents modules appartiennent par exemple à un microprocesseur adapté.

Le module d'estimation des puissances permet notamment la recalibration des modèles de propagation utilisés dans les outils de planification du réseau habituellement utilisés. Le module de seuillage permet par exemple de déterminer des zones de trafic et l'optimisation de la planification.

La figure 3 schématise un exemple de déroulement des étapes exécutées par le procédé selon l'invention.

Etape 1 - Mesure du signal sur le réseau CDMA à analyser

Cette étape consiste à numériser le signal reçu par le récepteur du dispositif d'analyse pour chaque point de mesure (ou point d'analyse) souhaité, à la fréquence désignée par l'opérateur et à effectuer le passage en bande de base du signal numérisé.

Etape 2 - Détection des stations interférentes

A partir du signal en bande de base reçu sur chacun des éléments du réseau de capteurs du dispositif d'analyse, effectuer une synchronisation multicapteurs afin de détecter les stations de base reçues en chaque point de mesure. Cette étape a notamment pour fonction de détecter les stations interférentes par détection de la séquence de synchronisation du signal (critère de synchronisation à partir du signal reçu et des séquences de référence). Cette synchronisation multicapteurs s'effectue par exemple en 3 étapes:

1 détection des séquences de synchronisation primaire (P-SCH) présentes au début de chaque slot de la trame UMTS FDD. Cette étape fournit la synchronisation slot.
2 détection des séquences de synchronisation secondaire (S-SCH) présentes au débit de chaque slot de la trame UMTS FDD et détermination du groupe de code d'embrouillage (1 groupe sur 64 possibles). Cette étape fournit la synchronisation trame.
3 détection de la séquence d'embrouillage ('scrambling sequence' en anglo-saxon) utilisée par la station de base détectée (une séquence parmi les 8 possibilités du code d'embrouillage déterminé lors de l'étape 2).

Les 3 étapes de synchronisation consistent notamment à calculer un critère de synchronisation à partir du signal reçu et des séquences de références correspondant aux canaux P-SCH, S-SCH et P-CPICH. Toute méthode connue de l'Homme du métier peut être utilisée pour effectuer cette étape, en particulier les méthodes utilisées pour les applications monocapteurs si le dispositif comporte une seule antenne ou la méthode multicapteurs telle que celle décrite dans le brevet FR 2 715 488 si le dispositif comporte plusieurs antennes. L'utilisation de l'algorithme de synchronisation multicapteurs permet la détection de stations faibles mais ayant un impact sur les performances d'un mobile.

En effet, pour un réseau UMTS FDD, une détection effectuée avec un capteur ne permet généralement pas de détecter certaines stations de faible niveau, qui, lorsqu'elles sont fortement chargées, peuvent dégrader significativement les performances d'un mobile situé au point d'analyse. Ce phénomène est d'autant plus notable que la mesure est faite sur un réseau comportant une charge de trafic importante.

Dans la présente description, le terme « multicapteurs » couvre aussi le cas particulier d'un réseau comprenant un seul capteur ».

A l'issue de cette étape 2, les stations de base reçues au point de mesure sont détectées, avec leur synchronisation trame et leur code de scrambling.

Etape 3 - Estimation des canaux de propagation

Dans cette étape, le procédé réalise tout d'abord sur chaque slot d'une trame du signal, par exemple à partir de la séquence portée par le canal pilote P-CPICH, une estimation du canal de propagation pour chaque station de base détectée, entre la station et le point de mesure, ceci sur chaque capteur du dispositif d'analyse dans le cas où son récepteur comporte plusieurs capteurs. Par la suite, pour chaque slot s, la réponse impulsionnelle du canal de propagation associée à la station de base utile est notée: $h(0,s)$, ..., $h(L\text{-}1,s)$, celles associées aux stations de base interférentes : $h_i(0,s)$, ..., $h_i(L_i\text{-}1,s)$. Les vecteurs $h(k,s)$ et $h_i(k,s)$ sont de dimension $N_{voie}$, où $N_{voie}$ est le nombre de capteurs du dispositif. Afin d'améliorer les performances, cette estimation est faite sur 2 échantillons par chip.

Une station de base utile correspond à une station de base avec laquelle le mobile placé au point d'analyse serait en liaison. Dans le cas où plusieurs stations sont détectées avec des niveaux voisins, un mobile placé au point d'analyse peut être en liaison avec chacune de ces stations et par la suite, chacune de ces stations sera considérée à son tour comme station de base utile, les autres stations étant considérées comme stations interférentes. L'ensemble des stations de base avec lesquelles le mobile est en communication est appelé « active set » du mobile.

L'estimation de canal est effectuée, par exemple, slot par slot par l'une des méthodes connues de l'Homme du métier, par exemple par corrélation du signal reçu avec la séquence du canal pilote P-CPICH, suivi éventuellement d'une pondération des coefficients de la réponse impulsionnelle du canal ainsi obtenue, par exemple comme décrit dans la demande de brevet FR 2 821 502.

Etape 4 - estimation des puissances reçues *Pi* avec *i* l'indice d'une station,

Estimer les puissances moyennes des canaux P-CPICH des différentes stations de base détectées à partir de la puissance des trajets principaux retournés par l'estimation de canal. La puissance *Pi* s'exprime de la manière suivante :

$$Pi = \frac{1}{Nvoie * Nslot} \sum_{s} \sum_{i} h(i,s)^H h(i,s)$$

où $h(i,s)^H$ correspond à la transposé-conjugué du vecteur $h(i,s)$, *Nslot* au nombre de slots sur lequel l'estimation est réalisée et $N_{voie}$ au nombre d'antennes du réseau de capteurs du dispositif.

A partir de cette estimation on détermine d'une part la station de base de plus fort niveau, dite station de base serveuse (ou en anglo-saxon « best server ») et d'autre part les stations de base appartenant au groupe « active set ».

L'estimation des puissances des canaux permet en effet de définir un groupe de stations appartenant à « l'active set » du mobile au point de mesure, c'est-à-dire les stations de base dont le niveau est situé à moins de x dB du niveau de la station dominante (x correspond à un seuil défini par l'opérateur, typiquement de l'ordre de 5 dB).

A l'issue de l'étape 4, le dispositif d'analyse a effectué différentes mesures qui vont être utilisées pour estimer le facteur d'interférence liée à une station mobile qui serait disposée en un point de mesure donné.

Etape 5 - estimation du filtre de réception

Estimer le filtre de réception mis en oeuvre sur chaque slot s par le mobile pour la réception d'une station de base utile afin d'évaluer à l'étape 6 les performances obtenues par la mise en oeuvre de ce filtre: $g(0,s,a)$, ..., $g(P\text{-}1,s,a)$. L'indice *a* correspond à un indice de configuration d'antenne, *A* correspond à l'ensemble des configurations d'antenne prise en compte pour la réception par le mobile :

- si le mobile effectue une réception sur 1 capteur, $a$ correspond à l'indice de l'antenne prise en compte dans le réseau de $N_{voie}$ mis en oeuvre par le dispositif, et le filtre $g$ est un filtre temporel. L'ensemble des configurations d'antenne correspond alors au nombre de voies du dispositif $A = \{1,2,...,N_{voie}\}$

- si le mobile effectue une réception sur plusieurs capteurs, $a$ correspond aux indices des antennes prises en compte et le filtre $g$ est un filtre spatio-temporel. Par exemple, si le mobile effectue une réception sur deux antennes, l'ensemble des configurations d'antenne comporte des couples de deux antennes choisis parmi les $N_{voie}$ du dispositif, par exemple: $A = \{(1,2), (2,3) ,...,(N_{voie}-1,N_{voie})\}$

A l'heure actuelle, la réception sur les mobiles est effectuée en prenant en compte un capteur, mais rien n'empêche à l'avenir d'effectuer cette réception sur plusieurs capteurs, afin d'améliorer les performances des mobiles par des traitements multicapteurs intelligents (diversité, antibrouillage). L'invention permet de déterminer l'apport de tels traitements sur les performances du réseau, en calculant le facteur d'interférence associé, quel que soit le nombre de capteurs utilisé dans le traitement mis en oeuvre par le mobile.

L'utilisation de plusieurs capteurs permet notamment la détection de stations de faible niveau, qui lorsqu'elles sont chargées, interviennent sur les performances d'un mobile, d'où une meilleure estimation du facteur d'interférence.

A titre d'exemple, dans le cas du récepteur RAKE à $M$ doigts, avec $M \leq P$, la réponse impulsionnelle du filtre $g$ s'étend sur un horizon temporel de $P$ échantillons, mais seuls $M$ coefficients sont non nuls :

- $g(k_i,s,a) = h(k_i,s,a)$ avec $i=1,..,M$, les indices $k_i$ correspondant aux $M$ trajets de plus forte puissance,

- $g(k_i,s,a) = 0$ sinon.

Dans cette formule, on a noté $h(k_i,s,a)$ la restriction du canal multicapteurs $h(k_i,s)$ correspondant aux antennes de la configuration d'antenne $a$.

A l'issue de l'étape 5, on est en possession du filtre mis en oeuvre par un mobile dont on souhaite évaluer les performances, pour la réception d'une station de base utile sur chaque slot $s$ et sur chaque antenne. Le fonctionnement d'un récepteur dont les performances sont évaluées par le procédé selon l'invention comporte les étapes décrites précédemment (formules (4) à (6))

○ Filtrage spatio-temporel par le filtre $g$ (filtrage temporel dans le cas du récepteur monocapteur),
○ Désembrouillage par le code de scrambling,
○ Désétalement par le code d'étalement CDMA OVSF associé au mobile $u$ de facteur d'étalement N$u$.

Cette étape est effectuée pour chaque station de base utile, c'est-à-dire appartenant au groupe de stations de base actives (groupe active set). L'étape suivante consiste à déterminer le facteur d'interférences utilisé comme critère de planification du réseau.

Etape 6 - estimation du facteur d'interférences

A partir des résultats obtenus lors des étapes précédentes, le facteur d'interférence peut être calculé pour chaque slot $s$ et pour chaque configuration d'antenne $a$ en chaque point de mesure, pour un mobile qui serait placé à ces points de mesure selon les étapes décrites ci-après.

Déterminer tout d'abord, le rapport $E_s/I_o$ en sortie du récepteur mis en oeuvre par un mobile situé au point de mesure pour chaque station de base utile. Le rapport $E_s/I_o$ correspond au rapport signal/(bruit +interférence) où le terme d'interférence peut se décomposer en un terme d'interférence intra-cellulaire correspondant à l'interférence générée par tous les utilisateurs de la cellule lorsque la propagation se fait par multitrajets (en absence de multitrajets, ce terme est nul car tous les codes sont orthogonaux) et un terme d'interférence extra-cellulaire résultant des autres stations de base.

L'estimation du rapport $E_s/I_o$ pour une station dont on souhaite évaluer les performances est basé sur les fonctions suivantes, calculées à partir des estimées du canal de propagation :

$$R_{gh}(m,s,a) = \sum_{k=0}^{L-1} g(k+m,s,a)^H h(k,s,a)$$

$$R_{gh_i}(m,s,a) = \sum_{k=0}^{L_i-1} g(k+m,s,a)^H h_i(k,s,a) \qquad (7)$$

$$R_{gg}(m,s,a) = \sum_{k=0}^{L_i-1} g(k+m,s,a)^H g(k,s,a)$$

pour $m = -L, ..., L$.

La contribution à l'interférence globale de l'interférence intra-cellulaire est calculée grâce à la formule :

$$I_{Intra}(s,a) = Ps \times \frac{\sum_{\substack{m=-L, \\ m\neq 0}}^{L} \left|R_{gh}(m,s,a)\right|^2}{\left|R_{gh}(0,s,a)\right|^2} = Ps \times \alpha(s,a) \qquad (8)$$

où Ps désigne la puissance totale de la station principale normalisée par rapport à la puissance de son canal P-CPICH et $\alpha(s,a)$ le facteur de perte d'orthogonalité.

La contribution à l'interférence globale de chaque station $i$ est calculée grâce à la formule

$$I_{Station\,i}(s,a) = Ps_i \times \frac{\sum_{m=-L_i,}^{L_i} \left|R_{gh_i}(m,s,a)\right|^2}{\left|R_{gh}(0,s,a)\right|^2} = Ps_i \times \beta_i(s,a) \qquad (9)$$

où $Psi$ est la puissance de la station interférente numéro $i$ normalisée par rapport à son canal P-CPICH et $\beta i(s,a)$, le facteur d'interférence extracellulaire de la station $i$. Le terme extra cellulaire désigne des interférences causées par les stations de base non utiles.

La contribution à l'interférence globale du bruit thermique est calculée grâce à la formule

$$(10)\quad I_{Bruit\,thermique}(s,a) = \sigma^2 \times \frac{\left|R_{gg}(0,s,a)\right|}{\left|R_{gh}(0,s,a)\right|^2} = \sigma^2 \times \gamma(s,a)$$

où $\sigma^2$ est la puissance du bruit thermique.

Le rapport signal à interférence plus bruit en sortie du récepteur dont on souhaite évaluer les performances est alors donné par la formule pour chaque slot s et chaque configuration d'antenne $a$:

$$E_s/I_o(s,a) = \frac{Nu \times Pu}{I_{Intra}(s,a) + \sum_i I_{Station\,i}(s,a) + I_{Bruit\,thermique}(s,a)} \qquad (11)$$

$$= \frac{Nu \times Pu}{P_s\alpha(s,a) + \sum_i P_{si}\beta_i(s,a) + \sigma^2\gamma(s,a)}$$

où *Pu* désigne la puissance de l'utilisateur *u* (normalisée par la puissance du canal P-CPICH) dont on souhaite évaluer les performances et *Nu* son facteur d'étalement.

En négligeant le bruit thermique et en supposant que toutes les stations émettent avec la même puissance par rapport à la puissance de leurs canaux P-CPICH respectifs ($P_S=P_{Sj}=P$), le rapport $E_s/I_0$ peut alors s'écrire, pour chaque slot *s* et chaque configuration d'antenne *a*, sous la forme :

$$E_s/I_o(s,a) = \frac{Nu \times Pu}{P} \times \frac{1}{\alpha(s,a) + \sum_i \beta_i(s,a)} = \frac{Nu \times Pu}{P} \times IF(s,a)$$

$$(12)$$

où *IF(s,a)* est le facteur d'interférence :

$$IF(s,a) = \frac{1}{\alpha(s,a) + \sum_i \beta_i(s,a)}. \qquad\qquad (13)$$

Le facteur d'interférence est calculé sur chaque slot où le canal de propagation a été estimé et sur chaque configuration de réseau d'antenne pris en compte pour le traitement effectué par le mobile. Il peut ensuite être moyenné sur chaque slot afin d'améliorer son estimation et la rendre moins sujette au fading. Il peut également être moyenné sur les différentes configurations d'antennes formées à partir des antennes du dispositif. Ces différents moyennages permettent de rendre compte du rapport $E_s/I_0$ moyen en sortie d'un récepteur mis en oeuvre par un mobile se déplaçant au point de mesure.

Le facteur d'interférence peut aussi être calculé lorsque le mobile est en liaison avec plusieurs stations de base. En supposant que les stations de base du groupe « active set » du mobile émettent la même puissance à destination du mobile, le facteur d'interférence s'obtient en additionnant les facteurs d'interférences obtenus par la formule (13) pour chaque station de base du groupe « active set ». Dans cette estimation, chaque station de base de l'active set est à son tour considérée comme station de base utile pour laquelle on effectue les étapes 5 et 6, toutes les autres stations détectées (y compris les autres stations de l'active set) étant considérées comme des stations interférentes.

Ainsi, les étapes 5 et 6 sont réitérées autant de fois qu'il y a de stations de base utiles appartenant au groupe « active set ».

Le facteur d'interférence dépend uniquement des canaux de propagation associés à chacune des stations de base reçues au point de mesure, ainsi que du filtre de réception utilisé, classiquement un filtre basé sur un récepteur Rake monocapteur à *N* doigts. Le fait d'avoir supposé que les stations de base émettent toutes avec la même puissance par rapport à la puissance de leur canaux P-CPICH a permis de rendre ce facteur indépendant de ces puissances. Cette hypothèse correspond à celle qui est faite par la majorité des opérateurs pour effectuer leur planification, le facteur d'interférence résultant peut donc être utilisé comme critère de planification.

La détection de toutes les stations de base au moyen de plusieurs capteurs, par exemple, permet une estimation précise du facteur d'interférence.

Le facteur d'interférence peut être estimé quel que soit la charge au moment de la mesure. La charge du trafic peut influer sur le nombre de stations de base détectées, et donc sur la précision de l'estimation, non sur la possibilité de le calculer.

Etape 7 : Comparaison à un seuil

Le facteur d'interférence *IF* est ensuite comparé à différents seuils pour chaque service que l'opérateur souhaite mettre en place.

A partir du facteur d'interférence *IF* obtenu par la formule (13), on détermine, par la formule (12), le rapport $E_S/I_0$ en sortie d'un récepteur mis en oeuvre par le mobile aux points de mesure, dans le cas où le réseau est uniformément chargé. Pour chaque service que souhaite mettre en place l'opérateur, ce rapport $E_S/I_0$ permet, par exemple, de déterminer le taux d'erreur binaire avant décodage et ensuite le taux d'erreur binaire après décodage par des tables de correspondance. Le taux d'erreur binaire après décodage permet de déterminer la qualité de service associée. Le facteur d'interférence permet donc de déterminer la qualité de service associée à chaque type de service proposé par l'opérateur. Comme décrit dans le brevet, la garantie d'une bonne estimation est apportée par la modélisation qui est faite du comportement réel d'un mobile mettant en oeuvre un récepteur Rake.

L'opérateur peut donc mettre en oeuvre des seuils sur le facteur d'interférence pour chaque service et déterminer les zones de service. A chaque service proposé par l'opérateur, des seuils relatifs à la valeur du facteur d'interférence sont associés permettant de déterminer si le service peut être ou non assuré au point de mesure. Lorsque le facteur d'interférence est inférieur au seuil fixé pour un service donné sur une zone donnée, l'opérateur peut déterminer la cause de la dégradation :

○ La station de base principale est reçue avec un niveau trop faible,

○ Un trop grand nombre de stations de base sont reçues avec des niveaux significatifs. L'opérateur peut alors identifier les stations de base responsables de la dégradation et évaluer quantitativement la dégradation introduite de façon à déterminer au mieux la correction à apporter.
L'opérateur peut ainsi revoir sa planification et suivant les cas :

○ Diminuer ou augmenter les puissances émises par certaines stations de base,

○ Modifier l'inclinaison des antennes,

○ Ajouter des stations de base sur des zones insuffisamment couvertes.

L'un des avantages du dispositif est qu'il peut être utilisé sans aucune interaction avec le réseau en fonctionnement opérationnel, en particulier, il n'est pas nécessaire d'éteindre l'une ou l'autre des stations ou de connaître la base de données de l'opérateur.

De plus, les calculs effectués pour déterminer le facteur d'interférence permettent également d'estimer, grâce aux mesures effectuées sur le terrain, le facteur de perte d'orthogonalité qui caractérise l'interférence intracellulaire due à la propagation multi-trajets. L'invention offre aussi l'avantage d'utiliser des mesures effectuées sur le terrain.

L'estimation des niveaux permet une recalibration des modèles de propagation utilisés dans les outils de planification habituellement utilisés.

L'estimation du facteur d'interférence permet de fournir un critère simple et efficace pour déterminer la qualité de service offerte aux points de mesure.

Sans sortir du cadre de l'invention, les étapes décrites ci-dessus sont exécutées pour un réseau d'antennes multi-capteurs, et aussi pour un récepteur comprenant un seul capteur.

**Revendications**

1.   Procédé d'optimisation de la planification dans un réseau de communications de type CDMA comportant une ou plusieurs stations de base et un ou plusieurs utilisateurs mobiles, les signaux échangés étant composés d'une ou de plusieurs trames constituées de slots s, **caractérisé en ce qu'**il comporte au moins les étapes suivantes :

a) positionner un dispositif d'analyse comportant une ou plusieurs voies de réception adapté à détecter les stations de base reçues en un point de mesure au moyen d'une synchronisation multicapteurs,
b) pour chaque station de base détectée, estimer le canal de propagation, $h(0, s)$, ..., $h(L-1, s)$, entre le point de mesure et le dispositif, avec L la longueur du canal de propagation, s étant l'indice d'un slot,
c) à partir de la puissance des trajets retournés par l'estimation de canal, estimer les puissances reçues Pi pour toutes les stations de base détectées,
d) déterminer le ou les stations de base de plus fort niveaux qui définissent un groupe de stations actives,
e) à partir des résultats obtenus aux étapes a) à d), estimer pour chaque station de base du groupe des stations actives, le filtre de réception $g(0, s, a)$ mis en oeuvre par un mobile situé au point de mesure pour la réception de la station considérée, avec a l'indice de la configuration d'antenne,
f) estimer, pour chaque slot s et chaque configuration d'antenne a du mobile, le rapport $E_s/I_0$ signal/ (bruit + interférence), à partir des estimées du canal de propagation, et en déduire le facteur d'interférence *IF* associé au mobile placé au point de mesure, où
g) déterminer les services pouvant être assurés au point de mesure et comparer la valeur du facteur d'interférence *IF* obtenue à l'étape f) aux valeurs seuils dépendant de chaque type de service.

**2.** Procédé selon la revendication 1 **caractérisé en ce que** le réseau est un réseau UMTS ou IS95 ou CDMA2000.

**3.** Procédé selon la revendication 2 **caractérisé en ce que** l'étape de détection de synchronisation multicapteurs pour une application UMTS FDD comporte les étapes suivantes :

1 détection des séquences de synchronisation primaire, P-SCH, présentes au début de chaque slot de la trame UMTS FDD,
2 détection des séquences de synchronisation secondaire, S-SCH, présentes au débit de chaque slot de la trame UMTS FDD et détermination du groupe de code d'embrouillage,
3 détection de la séquence d'embrouillage utilisée par la station de base détectée.

**4.** Procédé selon la revendication 1 **caractérisé en ce que** la puissance Pi s'exprime de la manière suivante :

$$Pi = \frac{1}{Nvoie * Nslot} \sum_{s} \sum_{i} \boldsymbol{h}(i,s)^{H} \boldsymbol{h}(i,s)$$

où $\boldsymbol{h}(i,s)^{H}$ correspond à la transposé-conjugué du vecteur $\boldsymbol{h}(i,s)$, $Nslot$ au nombre de slots sur lequel l'estimation est réalisée et $N_{voie}$ au nombre d'antennes du réseau de capteurs du dispositif.

**5.** Procédé selon la revendication 2 **caractérisé en ce que** le récepteur d'une station mobile est un récepteur Rake ayant M doigts et **en ce que** l'estimation du filtre de réception est effectuée de la manière suivante :

• $g(k_i,s,a) = h(k_i,s,a)$ avec $i=1,...M$, les indices $k_i$ correspondant aux $M$ trajets de plus forte puissance,
• $g(k_i,s,a) = 0$ sinon.

**6.** Procédé selon la revendication 1 **caractérisé en ce que** la valeur du rapport $E_s/I_o$ est déterminée à partir des estimées du canal de propagation :

$$E_s / I_o(s,a) = \frac{Nu \times Pu}{P_s \alpha(s,a) + \sum_i P_{si} \beta_i(s,a) + \sigma^2 \gamma(s,a)}$$

avec

$$\frac{\sum_{\substack{m=-L \\ m \neq 0}}^{L} \left| R_{gh}(m,s,a) \right|^2}{\left| R_{gh}(0,s,a) \right|^2} = \alpha(s,a)$$

le facteur de perte d'orthogonalité.

$$\frac{\sum_{m=-L_i}^{L_i} \left| R_{gh_i}(m,s,a) \right|^2}{\left| R_{gh}(0,s,a) \right|^2} = \beta_i(s,a)$$

le facteur d'interférence extracellulaire de la station $i$.

$$\frac{\left|R_{gg}(0,s,a)\right|}{\left|R_{gh}(0,s,a)\right|^{2}} = \gamma(s,a)$$

et

$$R_{gh}(m,s,a) = \sum_{k=0}^{L-1} \mathbf{g}(k+m,s,a)^{H}\,\mathbf{h}(k,s,a)$$

$$R_{gh_i}(m,s,a) = \sum_{k=0}^{L_i-1} \mathbf{g}(k+m,s,a)^{H}\,\mathbf{h}_i(k,s,a)$$

$$R_{gg}(m,s,a) = \sum_{k=0}^{L_i-1} \mathbf{g}(k+m,s,a)^{H}\,\mathbf{g}(k,s,a)$$

pour $m = -L, ..., L$.

Nu correspond au facteur d'étalement, u un mobile, σ le bruit thermique et R l'estimée d'un canal de propagation.

7. Procédé selon la revendication 6 **caractérisé en ce que** le facteur d'interférence *IF* est déterminé de la manière suivante :

$$IF(s,a) = \frac{1}{\alpha(s,a) + \sum_i \beta_i(s,a)}$$

8. Procédé selon la revendication 7 **caractérisé en ce que** un mobile est en liaison avec plusieurs stations de base et le facteur d'interférence est égal à la somme des facteurs d'interférences obtenus pour chaque station de base du groupe des stations actives.

9. Procédé selon la revendication 1 **caractérisé en ce que** le mobile effectue une réception sur un capteur, *a* correspond à l'indice de l'antenne prise en compte dans le réseau de $N_{voie}$ mis en oeuvre par le dispositif, et le filtre **g** est un filtre temporel.

10. Procédé selon la revendication 1 **caractérisé en ce que** le mobile effectue une réception sur plusieurs capteurs, *a* correspond aux indices des antennes prises en compte et le filtre **g** est un filtre spatio-temporel.

**Claims**

1. Method of optimizing scheduling in a communications network of CDMA type comprising one or more base stations and one or more mobile users, the signals exchanged being composed of one or of several frames consisting of slots s, **characterized in that** it comprises at least the following steps:

    a) position an analysis device comprising one or more reception pathways suitable for detecting the base stations received at a measurement point by means of multisensor synchronization,

    b) for each detected base station, estimate the propagation channel, *h*(0, s), ..., *h*(*L*-1, s), between the measurement point and the device, with *L* the length of the propagation channel, s being the index of a slot,

    c) on the basis of the power of the paths returned by the channel estimation, estimate the received powers Pi for all the detected base stations,

    d) determine the base station or stations of strongest levels which define a group of active stations,

    e) on the basis of the results obtained in steps a) to d), estimate for each base station of the group of active stations, the reception filter **g** (0, s, a) implemented by a mobile situated at the measurement point for the reception of the station considered, with a the antenna configuration index,

    f) estimate, for each slot s and each antenna configuration a of the mobile, the ratio $E_s/I_0$ signal/(noise &

interference), on the basis of the estimates of the propagation channel, and deduce therefrom the interference factor *IF* associated with the mobile placed at the measurement point,

g) determine the services that can be ensured at the measurement point and compare the value of the interference factor IF obtained in step f) with the threshold values dependent on each type of service.

2. Method according to Claim 1, **characterized in that** the network is a UMTS or IS95 or CDMA2000 network.

3. Method according to Claim 2, **characterized in that** the step of detection of multisensor synchronization for a UMTS FDD application comprises the following steps:

1 detection of the sequences of primary synchronization, P-SCH, present at the start of each slot of the UMTS FDD frame,
2 detection of the sequences of secondary synchronization, S-SCH, present at the start of each slot of the UMTS FDD frame and determination of the scrambling code group,
3 detection of the scrambling sequence used by the detected base station.

4. Method according to Claim 1, **characterized in that** the power Pi is expressed in the following manner:

$$Pi \; \square \; \frac{1}{Npath * Nslot} \sum_{s} \; \sum_{i} \mathbf{h}(i,s)^{H} \mathbf{h}(i,s)$$

where $\mathbf{h}(i,s)^{H}$ corresponds to the conjugate transpose of the vector $\mathbf{h}(i,s)$, *Nslot* to the number of slots on which the estimation is carried out and $N_{path}$ to the number of antennas of the network of sensors of the device.

5. Method according to Claim 2, **characterized in that** the receiver of a mobile station is a Rake receiver having M fingers and **in that** the estimation of the reception filter is performed in the following manner:

• $\mathbf{g}(k_i, s, a) = \mathbf{h}(k_i, s, a)$ with $i=1, \dots M$, the indices $k_i$ corresponding to the $M$ paths of highest power,
• $\mathbf{g}(k_i, s, a) = 0$ otherwise.

6. Method according to Claim 1, **characterized in that** the value of the ratio $E_s/I_o$ is determined on the basis of the estimates of the propagation channel:

$$E_s / I_o(s,a) = \frac{Nu \times Pu}{P_s \alpha(s,a) + \sum_{i} P_{si} \beta_i(s,a) + \sigma^2 \gamma(s,a)}$$

with

$$\frac{\sum\limits_{\substack{m=-L, \\ m \neq 0}}^{L} \left| R_{gh}(m,s,a) \right|^2}{\left| R_{gh}(0,s,a) \right|^2} = \alpha(s,a)$$

the orthogonality loss factor.

$$\frac{\sum\limits_{m=-L_i,}^{L_i} \left| R_{gh_i}(m,s,a) \right|^2}{\left| R_{gh}(0,s,a) \right|^2} = \beta_i(s,a)$$

the extracellular interference factor of station *i*.

$$\frac{\left|R_{gg}(0,s,a)\right|}{\left|R_{gh}(0,s,a)\right|^2} = \gamma(s,a)$$

and

$$R_{gh}(m,s,a) = \sum_{k=0}^{L-1} \mathbf{g}(k+m,s,a)^H \mathbf{h}(k,s,a)$$

$$R_{gh_i}(m,s,a) = \sum_{k=0}^{L_i-1} \mathbf{g}(k+m,s,a)^H \mathbf{h}_i(k,s,a)$$

$$R_{gg}(m,s,a) = \sum_{k=0}^{L_i-1} \mathbf{g}(k+m,s,a)^H \mathbf{g}(k,s,a)$$

for $m = -L, ..., L$.

Nu corresponds to the spreading factor, u a mobile, o the thermal noise and R the estimate of a propagation channel.

7. Method according to Claim 6, **characterized in that** the interference factor *IF* is determined in the following manner:

$$IF(s,a) = \frac{1}{\alpha(s,a) + \sum_i \beta_i(s,a)}$$

8. Method according to Claim 7, **characterized in that** a mobile is in contact with several base stations and the interference factor is equal to the sum of the interference factors obtained for each base station of the group of active stations.

9. Method according to Claim 1, **characterized in that** the mobile performs a reception on a sensor, a corresponds to the index of the antenna taken into account in the network of $N_{path}$ implemented by the device, and the filter *g* is a temporal filter.

10. Method according to Claim 1, **characterized in that** the mobile performs a reception on several sensors, *a* corresponds to the indices of the antennas taken into account and the filter *g* is a spatio-temporal filter.

**Patentansprüche**

1. Verfahren zur Optimierung der Planung in einem Kommunikationsnetzwerk vom Typ CDMA, das eine oder mehrere Basisstationen und einen oder mehrere Mobilteilnehmer aufweist, wobei die ausgetauschten Signale aus einem oder mehreren Rahmen zusammengesetzt sind, die aus Slots s bestehen, **dadurch gekennzeichnet, dass** es mindestens die folgenden Schritte aufweist:

a) Positionieren einer Analysevorrichtung mit einem oder mehreren Empfangskanälen, die geeignet ist, die empfangenen Basisstationen an einem Messpunkt mittels einer Multisensor-Synchronisation zu erfassen,
b) für jede erfasste Basisstation, Schätzen des Ausbreitungskanals *h*(0, s), ..., *h*(*L*-1, s) zwischen dem Messpunkt und der Vorrichtung, mit L der Länge des Ausbreitungskanals, wobei s der Index eines Slots ist,
c) ausgehend von der Leistung der von der Kanalschätzung zurückgesendeten Strecken, Schätzen der empfangenen Leistungen Pi für alle erfassten Basisstationen,
d) Bestimmen der Basisstation(en) höchster Ebenen, die eine Gruppe von aktiven Stationen definieren,
e) ausgehend von den in den Schritten a) bis d) erhaltenen Ergebnissen, Schätzen, für jede Basisstation der Gruppe der aktiven Stationen, des Empfangsfilters *g*(0, s, a), das von einer Mobilstation eingesetzt wird, die sich am Messpunkt für den Empfang der betrachteten Station befindet, mit a dem Index der Antennenkonfiguration,

f) Schätzen, für jeden Slot s und jede Antennenkonfiguration a der Mobilstation, des Verhältnisses $E_s/I_0$ Signal/ (Rauschen + Interferenz) ausgehend von den Schätzwerten des Ausbreitungskanals, und daraus Ableiten des Interferenzfaktors *IF*, der der Mobilstation zugeordnet ist, die sich am Messpunkt befindet,

g) Bestimmen der Dienste, die am Messpunkt gewährleistet werden können, und Vergleich des im Schritt f) erhaltenen Werts des Interferenzfaktors *IF* mit den Schwellwerten, die von jedem Diensttyp abhängen.

2.  Verfahren nach Anspruch 1, **dadurch gekennzeichnet, dass** das Netz ein UMTS- oder IS95- oder CDMA2000-Netz ist.

3.  Verfahren nach Anspruch 2, **dadurch gekennzeichnet, dass** der Schritt der Erfassung einer Multisensor-Synchronisation für eine Anwendung UMTS FDD die folgenden Schritte aufweist:

    1 Erfassung der primären Synchronisationsfolgen P-SCH, die am Anfang jedes Slots des Rahmens UMTS FDD vorhanden sind,
    2 Erfassung der sekundären Synchronisationsfolgen S-SCH, die am Anfang jedes Slots des Rahmens UMTS FDD vorhanden sind, und Bestimmung der Verwürfelungscode-Gruppe,
    3 Erfassung der von der erfassten Basisstation verwendeten Verwürfelungsfolge.

4.  Verfahren nach Anspruch 1, **dadurch gekennzeichnet, dass** die Leistung Pi folgendermaßen ausgedrückt wird:

$$Pi = \frac{1}{Nweg * Nslot} \sum_{s} \sum_{i} \mathbf{h}(i,s)^{H} \mathbf{h}(i,s)$$

wobei $\boldsymbol{h}(i,s)^{H}$ der Transponierten-Konjugierten des Vektors $\boldsymbol{h}(i,s)$, *Nslot* der Anzahl von Slots, an der die Schätzung durchgeführt wird, und $N_{weg}$ der Anzahl von Antennen des Netzes von Sensoren der Vorrichtung entspricht.

5.  Verfahren nach Anspruch 2, **dadurch gekennzeichnet, dass** der Empfänger einer Mobilstation ein Rake-Empfänger mit M Fingern ist, und dass die Schätzung des Empfangsfilters folgendermaßen durchgeführt wird:

    • $\boldsymbol{g}(k_i,s,\alpha) = \boldsymbol{h}(k_i,s,\alpha)$ mit $i$=1, ..., $M$, wobei die Indices $k_i$ den $M$ Strecken höchster Leistung entsprechen,
    • ansonsten gilt $\boldsymbol{g}(k_i,s,\alpha) = 0$.

6.  Verfahren nach Anspruch 1, **dadurch gekennzeichnet, dass** der Wert des Verhältnisses $E_s/I_0$ ausgehend von den Schätzwerten des Ausbreitungskanals bestimmt wird:

$$E_s/I_0(s,a) = \frac{Nu \times Pu}{P_s \alpha(s,a) + \sum P_n \beta_n(s,a) + \sigma^2 \gamma(s,a)}$$

mit

$$\frac{\sum |R_u(m,s,a)|^2}{|R_u(0,s,a)|^2} = \alpha(s,a)$$

der Orthogonalitätsverlustfaktor

$$\frac{\sum\limits_{m=-L}^{L}\left|R_{gh}(m,s,a)\right|^{2}}{\left|R_{gg}(0,s,a)\right|^{2}}=\beta_{i}(s,a)$$

der extrazellulare
Interferenzfaktor der Station $i$

$$\frac{\left|R_{gh}(0,s,a)\right|^{2}}{\left|R_{gg}(0,s,a)\right|^{2}}=\gamma(s,a)$$

und

$$R_{gh}(m,s,a)=\sum_{k=0}^{Nu-1}\mathbf{g}(k+m,s,a)^{H}\mathbf{h}(k,s,a)$$

$$R_{gh_i}(m,s,a)=\sum_{k=0}^{Nu-1}\mathbf{g}(k+m,s,a)^{H}\mathbf{h}_{i}(k,s,a)$$

$$R_{gg}(m,s,a)=\sum_{k=0}^{Nu-1}\mathbf{g}(k+m,s,a)^{H}\mathbf{g}(k,s,a)$$

für m = -L, ..., L;
Nu entspricht dem Spreizfaktor, u einer Mobilstation, σ dem Wärmerauschen und R dem Schätzwert eines Ausbreitungskanals.

7. Verfahren nach Anspruch 6, **dadurch gekennzeichnet, dass** der Interferenzfaktor *IF* folgendermaßen bestimmt wird:

$$IF(s,a)=\frac{1}{\alpha(s,a)+\sum_{i}\beta_{i}(s,a)}$$

8. Verfahren nach Anspruch 7, **dadurch gekennzeichnet, dass** eine Mobilstation mit mehreren Basisstationen verbunden und der Interferenzfaktor gleich der Summe der Interferenzfaktoren ist, die für jede Basisstation der Gruppe der aktiven Stationen erhalten werden.

9. Verfahren nach Anspruch 1, **dadurch gekennzeichnet, dass** die Mobilstation einen Empfang auf einem Sensor durchführt, a dem Index der Antenne entspricht, die im von der Vorrichtung eingesetzten Netz von $N_{voie}$ berücksichtigt wird, und das Filter *g* ein Zeitfilter ist.

10. Verfahren nach Anspruch 1, **dadurch gekennzeichnet, dass** die Mobilstation einen Empfang auf mehreren Sensoren durchführt, a den Indices der berücksichtigten Antennen entspricht und das Filter *g* ein Raum-Zeit-Filter ist.

FIG.1

FIG.2

Récepteur
Multi-voie 1

Cartes
d'acquisition
2

Passage en
bande de base

Détection
multi-voie 3

Synchronisation trame
Code de scrambling

Introduction dans les outils de
planification des valeurs réelles
de facteur de perte d'orthogonalité

Estimation des
réponses 4
impulsionnelles

Facteur de perte d'orthogonalité

Calcul du
facteur
d'interférence
6

Réponses
impulsionnelles

Seuillage 7

Facteur
d'interférence

Estimation des
puissances 5

Détermination des zones
de trafic et optimisation de
la planification

Recalibration des modèles
de propagation utilisés dans
les outils de planification

FIG.3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1098545 A
- FR 2715488
- FR 2821502